# EUROPEAN PATENT SPECIFICATION

(11) **EP 3 389 244 B1**
(45) Date of publication and mention of the grant of the patent: **13.05.2020**
(21) Application number: 17875072.5
(22) Date of filing: 27.02.2017
(51) Int. Cl.: H04L 29/12, H04L 29/08

(54) **DOMAIN NAME RESOLUTION SYSTEM, DOMAIN NAME RESOLUTION SERVER, AND DOMAIN NAME RESOLUTION METHOD**
SYSTEM ZUR AUFLÖSUNG EINES DOMAIN-NAMENS, SERVER ZUR AUFLÖSUNG EINES DOMAIN-NAMENS UND VERFAHREN ZUR AUFLÖSUNG EINES DOMAIN-NAMENS
SYSTÈME DE RÉSOLUTION DE NOM DE DOMAINE, SERVEUR DE RÉSOLUTION DE NOM DE DOMAINE ET PROCÉDÉ DE RÉSOLUTION DE NOM DE DOMAINE

(30) Priority: 19.02.2017 CN 201710088022
(43) Date of publication of application: 17.10.2018
(73) Proprietor: Wangsu Science & Technology Co., Ltd., Shanghai 200030 (CN)
(72) Inventor: WU, Xiaoying, Shanghai 200030 (CN); WU, Zhenyong, Shanghai 200030 (CN)
(74) Representative: Hanna Moore + Curley
(86) International application number: PCT/CN2017/075002
(87) International publication number: WO 2018/148984

(56) References cited:
- WO-A1-2014/089872
- CN-A- 103 501 358
- CN-A- 106 209 832
- US-A1- 2013 198 409
- US-A1- 2015 188 879

## Description

### FIELD OF THE DISCLOSURE

The present disclosure relates to the field of computer technology and, more particularly, relates to a domain name resolution system, a domain name resolution server, and a domain name resolution method.

### BACKGROUND

Currently, the portal for the most clients to access the content delivery network (CDN) resolves a domain name requested by the client to the CDN domain name via a Canonical Name (CNAME), and each domain name requested by the client corresponds to one CDN domain name. Hereinafter, such CDN domain name is called a portal domain name.

In the CDN network, the same server group is supplied for use simultaneously by various clients. If the IP of one server group is resolved directly for each portal domain name, once the one server group is unable to provide service, a large amount of domain names need to be switched, that is, the record of the IP address of the one server group corresponding to the portal domain name (i.e., the A record of the portal domain name) needs to be modified. The time to generate the A record can be relatively long, and the time to arrange the A record can be also relatively long. Accordingly, in existing technologies, often the top-level domain names using the same server group are aliased to the same second-level domain name via a CNAME. As such, if one server group cannot provide service, the second-level domain name corresponding to such server group may be rapidly resolved to another IP address.

However, the following deficiencies exist in the existing technologies: at least two layers of CNAME resolution are needed for the domain name query, that is, the domain name requested by the client is first aliased to the portal domain name via a CNAME, and the portal domain name is aliased to a second-level domain name via a CNAME. The two-layer CNAME resolution may increase the resolution time, and the failure rate caused by the two-layer CNAME resolution may be also increased. Further, when a large amount of clients are resolved to a second-level domain name via two-layer CNAME resolution, once the second-level domain name is under attack, because the domain names requested by a plurality of clients correspond to the same second-level domain name, it is nearly impossible to trace which client is specifically under attack.
The document US 2015/0188879 A1 discloses an apparatus for grouping servers and a method for grouping servers. The server grouping device includes a packet collection module for collecting or capturing communication packets transceiving between at least one wireless terminals and servers; a pattern grouping module grouping the servers into one or more groups; a matching information detecting module; a server grouping module for matching the service or the application to each group. The document WO 2014/089872 A1 provides a method and a system for supporting DNS resolution of a domain name group.

Based on the aforementioned issues in the existing technologies, embodiments of the present disclosure provides a domain name resolution system, server, and domain name resolution method, thereby solving the issues of a too long resolution time, a high resolution failure rate, and failure to trace the client under attack caused by the two-layer CNAME resolution in existing technologies. The invention is defined by the appended independent claims. Preferred embodiments are defined by the dependent claims.

Embodiments of the present disclosure provide a domain name resolution method, comprising the following steps:
Configuring a same extensive domain name for portal domain names using a same server group;
Resolving a domain name requested by a client to a portal domain name of the plurality of portal domain names configured with the same extensive domain name via a CNAME; and
Resolving the portal domain name, and using a resolution result of the portal domain name as the resolution result of the domain name requested by the client to be sent back to the client.

More specifically, the portal domain name includes the domain name requested by the client as a prefix and a suffix of the extensive domain name as the suffix.

Further, steps of resolving the portal domain name, and using the resolution result as the resolution result of the domain requested by the client to be sent back to the client comprise:

Searching whether the portal domain name has a precisely matched A record, if yes, using the precisely matched A record as the resolution result to be sent back to the client; otherwise, using an A record of the extensive domain name corresponding to the portal domain name as the resolution result to be sent back to the client.

More specifically, the precisely matched A record of the portal domain name comprises a network protocol address of a source station server corresponding to the domain name requested by the client, and when the domain name requested by the client needs to be back to a source station, the network protocol address of the source station is used as the resolution result to be sent back to the client.

More specifically, the precisely matched A record of the portal domain name comprises a network protocol address of a custom server corresponding to the domain name requested by the client, and when the domain name requested by the client needs to use the custom server, the network protocol address of the custom server is used as the resolution result to be sent back to the client.

Further, the same server group comprises a plurality of server clusters, each server cluster has a unique network protocol address, and the network protocol address corresponding to the same service group is resolved for the portal domain names using the same extensive domain name.

Further, the domain name resolution method further comprises:
When a certain service cluster in the service group encounters a fault, the extensive domain name of the corresponding service group is re-resolved to another network protocol address.

Embodiments of the present disclosure further provide a domain name resolution server, comprising:
A configuring module for configuring a same extensive domain name for portal domain names using a same service group;
A sending/receiving module connected to the configuring module and configured to receive a resolution request of a portal domain name, where the domain name requested by the client is resolved to the portal domain name of the plurality of portal domain names configured with the same extensive domain name via a CNAME;
A resolving module connected to the sending/receiving module, configured to perform resolving on the portal domain name, and use a resolution result of the portal domain name as the resolution result of the domain name requested by the client to be sent back to the client.

Further, the resolving module comprises:
A searching module, configured to search whether the portal domain name has a precisely matched A record or not, if yes, the precisely matched A record is used as the resolution result to be sent back to the client;
An extensive domain name resolving module connected to the searching module and configured to, when the searching module finds no precisely matched A record corresponding to the portal domain name, use an A record of the extensive domain name corresponding to the portal domain name as the resolution result to be sent back to the client.

Further, the domain name resolution server further comprises:
A scheduling module connected to the configuring module and the resolving module, respectively, and configured to, when a certain server cluster in the server group encounters a fault, re-resolve the extensive domain name of the corresponding server group to another network protocol address.

Further, the configuring module is for configuring a precisely matched A record of the portal domain name, the precisely matched A record of the portal domain name comprises a network protocol address of the source station server corresponding to the domain name requested by the client, and when the domain name requested by the client needs to be back to a source station, the searching module uses the network protocol address of the source station as the resolution result to be sent back to the client.

Further, the configuring module is for further configuring the precisely matched A record of the portal domain name, the precisely matched A record of the portal domain name comprises a network protocol address of a custom server corresponding to the domain name requested by the client, and when the domain name requested by the client needs to use the custom server, the searching module uses the network protocol address of the custom server as the resolution result to be sent back to the client.

Embodiments of the present disclosure further provide a domain name resolution system, comprising:

A client DNS server, configured to resolve the domain name requested by the client to an portal domain name of a content delivery network via a CNAME;

The aforementioned domain name resolution server, configured to configure a same extensive domain name for portal domain names using the same server group; receive a resolution request of the portal domain name of the plurality of portal domain names configured with the same extensive domain name, perform resolving on the portal domain name, and use the resolution result of the portal domain name as the resolution result of the domain name requested by the client to be sent back to the client.

Further, performing resolving, by the domain name resolution server, on the portal domain name, and using the resolution result as the resolution result of the domain name requested by the client to be sent back to the client specifically comprises: searching whether the portal domain name has a precisely matched A record, if yes, using the precisely matched A record as the resolution result to be sent back to a public network DNS server; otherwise, using an A record of the extensive domain name corresponding to the portal domain name as the resolution result to be sent back to the client.

More specifically, in the client DNS server, the domain name requested by the client is aliased to the portal domain name via a CNAME, where the portal domain name includes the domain name requested by the client as a prefix and a suffix of the extensive domain name as the suffix.

Advantageous effects brought by technical solutions provided by embodiments of the present disclosure are as follows: the present disclosure proposes a one-layer CNAME record method based on the extensive domain name, thereby reducing the CNAME record analysis by one layer of system domain name, shortening the system domain name resolution time, and decreasing the failure rate of the system domain name resolution with respect to the existing method; and at the same time, the scheduling time of the server based on the system domain name is shortened, and the configuration amount is decreased.

Further, the present disclosure no longer needs to modify the extensive domain name or the second-level domain name, and only the minimum amount of configuration needs to be added to support the special back-to-source configuration or other special configuration. Further, because the one-layer CNAME method is used, when a certain domain name is attacked, the specific client under attack may be easily and precisely found via the one-layer CNAME, thereby finding the source of the attack.

### BRIEF DESCRIPTION OF THE DRAWINGS

To more clearly illustrate technical solutions in embodiments of the present disclosure, the accompanying drawings used for describing the embodiments are briefly introduced hereinafter. Obviously, the accompanying drawings in the following descriptions are only some embodiments of the present disclosure, and for those ordinarily skilled in the relevant art, other drawings may be obtained according to the accompanying drawings without creative labor.
FIG. 1 illustrates a flow chart of an implementation method of a domain name resolution method according to the present disclosure;
FIG. 2 illustrates a flow chart of an implementation method of another domain name resolution method according to the present disclosure;
FIG. 3 illustrates a flow chart of an implementation method of another domain name resolution method according to the present disclosure;
FIG. 4 illustrates a structural view of an implementation method of a domain name resolution server according to the present disclosure;
FIG. 5 illustrates a structural view of an implementation method of another domain name resolution server according to the present disclosure;
FIG. 6 illustrates a structural view of an implementation method of another domain name resolution server according to the present disclosure; and
FIG. 7 illustrates a structural view of an implementation method of a domain name resolution system according to the present disclosure.

### DETAILED DESCRIPTION

To make the object, technical solutions and advantages of the present disclosure more apparent, implementation methods of the present disclosure will be described more fully hereinafter with reference to the accompanying drawings.

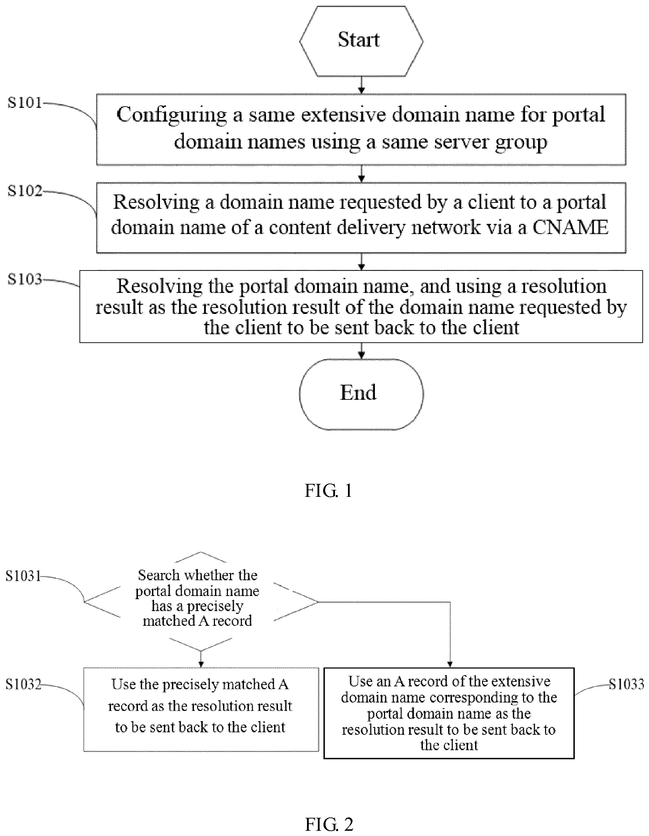

In one aspect, the present disclosure provides an implementation method of a domain name resolution method. As shown in FIG. 1, the method comprises the following steps:

Step S101, configuring a same extensive domain name for portal domain names using a same server group. In one embodiment, a configuration from an portal domain name pointing to an extensive domain name is configured at a DNS server of a content distribute network(CDN), where the portal domain name comprises a domain name requested by a client as a prefix and a suffix of the extensive domain name as the suffix. For example, when the domain name requested by the client is www.163.com and the extensive domain name is *.bbb.aaa.com, the portal domain name is www.163.com.bbb.aaa.com.

The same server group may comprise a plurality of server clusters, each server cluster has a unique network protocol address (IP), and the portal domain names using the same extensive domain name are resolved to have a network protocol address corresponding to the same server group. The content delivery network may have a plurality of portal domain names, such as www.163.com.bbb.aaa.com, news.163.com.bbb.aaa.com, and music.163.com.bbb.aaa.com, etc. Such portal domain names may all use the server group with a network protocol address of 192.168.100.100 in the content delivery network. The portal domain names may be all configured to have a same extensive domain name *.bbb.aaa.com. Accordingly, the configuration rules between the domain name requested by the client, the portal domain name, and the extensive domain name are associated.

Step S102, resolving the domain name requested by the client to the portal domain name of the content delivery network via a CNAME. When the client needs to perform expedited resolving on the domain name, only the domain name requested by the client needs to be aliased to the portal domain name via a CNAME at the client DNS server. For example, the client DNS server receives the domain name request of www.163.com sent from the client, and resolves www.163.com to the portal domain name www.163.com.bbb.aaa.com of the content delivery network via a CNAME. The domain names that request resolving sent from other clients are processed in a similar way, which is not repeated described here in the present disclosure. Such portal domain name may be obtained by aliasing the domain name requested by the client one time via a CNAME.

Step S103, performing resolving on the portal domain name, and using a resolution result as the resolution result of the domain name requested by the client to be sent back to the client. After a client DNS server resolves the domain name requested by the client to the portal domain name of the content delivery network via a CNAME, the client may request the DNS server of the content delivery network to perform resolving on the portal domain name. The DNS server of the content delivery network receives the resolution request and performs resolving on the portal domain name such as www.163.com.bbb.aaa.com, and uses the resolution result as the resolution result of the domain name requested by the client to be sent back to the client. More specifically, as mentioned above, a configuration is configured in the DNS server of the content delivery network. That is, the portal domain names using the same server group are configured to have the same extensive domain name. Accordingly, the specific process of resolving the portal domain name may use a method of searching for a precisely matched A record of the portal domain name and an A record of an extensive domain name corresponding to the portal domain name for resolving. The specific resolving process may refer to the implementation method corresponding to FIG. 2.

Such one-layer CNAME record method based on extensive domain name may shorten the resolution time of the domain name system and reduce the resolution failure rate of the domain name system. When a certain domain name is under attack, the domain name under attack may only be a precise domain name, such as the portal domain name or the domain name for which the client requests to resolve. The specific client under attack may be found easily and precisely via the one-layer CNAME. For example, when the portal domain name www.163.com.bbb.aaa.com is under attack, because the www.163.com.bbb.aaa.com is obtained by aliasing www.163.com via a CNAME, the domain name specifically under attack may thus be known to be www.163.com, thereby finding the source of the attack.

An implementation method of another domain name resolution method according to the present disclosure is illustrated in FIG.2, and Step S103 may specifically comprise the following steps:
Step S1031, searching whether the portal domain name has a precisely matched A record. In one implementation method, the precisely matched A record of the portal domain name comprises a network protocol address of the source station server corresponding to the domain name requested by the client and a network protocol address of a custom server corresponding to the domain name requested by the client. If the portal domain name has a precisely matched A record, Step S1032 is performed, otherwise Step S1033 is performed.

Step S1032, using the precisely matched A record as a resolution result to be sent back to the client.

When the domain name requested by the client needs to be back to the source station, the network protocol address of the source station is used as the resolution result to be sent back to the client. For example, when the domain name www.163.com requested by the client needs to be back to the source station at the Beijing telecom area, only the A record of www.163.com.bbb.aaa.com at the Beijing telecom area needs to be configured at the DNS server of the content delivery network. If the content delivery network receives a request from the Beijing telecom, the A record precisely matched with the configuration may be preferably sent back to the client.

When the domain name requested by the client needs to use the custom server, the network protocol address of the custom server is used as the resolution result to be sent back to the client. For example, the domain name www.163.com requested by the client needs to use a special server at Xinjiang telecom, a server may be individually configured for www.163.com at the Xinjiang telecom region over the DNS server of the content delivery network. If the content delivery network receives a request from the Xinjiang telecom, the server individually configured may be preferably matched.

Step S1033, using the A record of the extensive domain name corresponding to the portal domain name as the resolution result to be sent back to the client. If the portal domain name has no aforementioned precisely matched A record, the extensive domain name corresponding to the portal domain name is searched, and the A record of the extensive domain name is used as the resolution result after performing resolving on the portal domain name to be sent back to the client.

The present disclosure does not need to modify the extensive domain name or the second-level domain name, and only the minimum amount of configuration needs to be added to support the special back-to-source configuration or other special configurations. Because the added configuration amount is small and the implementation is easy, the special requirements of the domain name resolution may be satisfied.

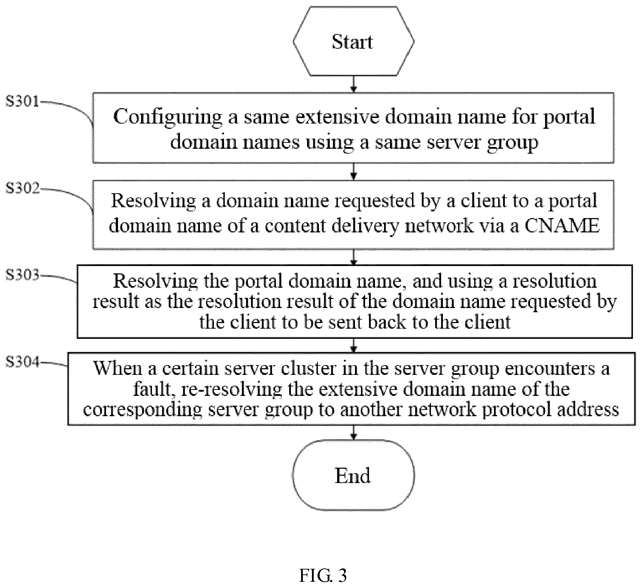

Another implementation method of the present disclosure is illustrated in FIG. 3, and Step S301-S303 may refer to Step S101-S103 in FIG. 1, which is not repeatedly described herein. In one embodiment, the domain name resolution method further comprises: Step S304, where when a certain server cluster in the server group encounters a fault, the extensive domain name of the corresponding server group is re-resolved to another network protocol address.

For example, www.163.com.bbb.aaa.com, news.163.com.bbb.aaa.com, and music.163.com.bbb.aaa.com may all use the server group with a network protocol address of 192.168.100.100. When the server group (192.168.100.100) used by the three portal domain name encounters a fault, only one domain name system configuration needs to be generated in the DNS server of the content delivery network to re-configure the extensive domain name *.bbb.aaa.com of the three portal domain names in the content delivery network from the network protocol address 192.168.100.100 of the original server group to the network protocol address of a new server group, such as 192.168.100.110. That is, the three portal domain names may be transferred to a new server cluster all at once in the content delivery network, instead of modifying the configurations corresponding to www.163.com.bbb.aaa.com, news.163.com.bbb.aaa.com, and music.163.bbb.aaa.com one by one. Thus, the scheduling time of the server is shortened, and the configuration amount is decreased.

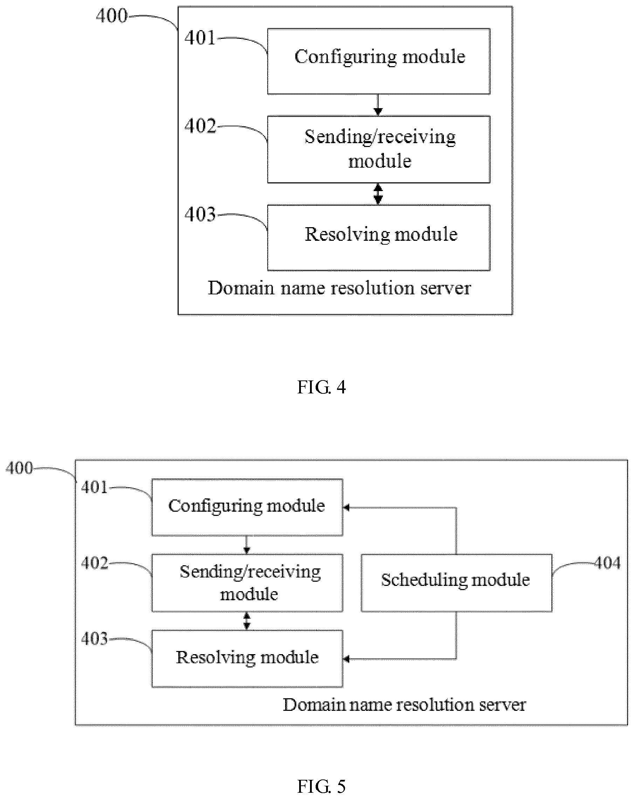

The present disclosure further provides an implementation method of a domain name resolution server 400. As shown in FIG. 4, the server 400 comprises: a configuring module 401, a sending/receiving module 402, and a resolving module 403. The configuring module 401 is configured to configure a same extensive domain name for portal domain names using a same server group; the sending/receiving module 402 is connected to the configuring module 401, and configured to receive a resolution request of the portal domain name, where the domain name requested by the client is resolved to the portal domain name of the content delivery network via a CNAME; the resolving module 403 is connected to the sending/receiving module 402 and configured to perform resolving on the portal domain name, and further uses the resolution result as the resolution result of the domain name requested by the client to be sent back to the client.

In some embodiment, the operational process of the domain name resolution server 400 is as follows: for example, the content delivery network may include three server groups with portal domain names all using a network protocol address of 1.1.1.1, and the three portal domain names may be www.163.com.bbb.aaa.com, news.163.com.bbb.aaa.com, and music.163.com.bbb.aaa.com, respectively.

The configuring module 401 may configure a same extensive domain name *.bbb.aaa.com for the three portal domain names. When the client DNS server receives a resolution request of a domain name www.163.com sent from the client, the client DNS server resolves the domain name to the portal domain name www.163.com.bbb.aaa.com via a CNAME, and the client may request the domain name resolution server 400 to perform resolving on the portal domain name www.163.com.bbb.aaa.com. The sending/receiving module 402 receives a resolution request of the portal domain name www.163.com.bbb.aaa.com, and the resolution module 403 performs resolving on the portal domain name www.163.com.bbb.aaa.com, and uses the resolution result as the resolution result of the domain name www.163.com requested by the client to be sent back to the client. Such one-layer CNAME record method based on extensive domain name may shorten the resolution time of the domain name system and decrease the resolution failure rate of the domain name system. When a certain domain name is under attack, the specific client under attack may be easily and precisely found via the one-layer CNAME. For example, when the portal domain name www.163.com.bbb.aaa.com of the content delivery network is under attack, because www.163.com.bbb.aaa.com is obtained by aliasing www.163.com via a CNAME, the specific domain name under attack may be known to be www.163.com, thereby finding the source of the attack.

More specifically, in an implementation method of another domain name resolution server 400 according to the present disclosure, as shown in FIG. 5, the domain name resolution server 400 may further comprise a scheduling module 404. The scheduling module 404 may be connected to the configuring module 401 and the resolving module 403, respectively, and may be configured to, when a certain server cluster in the server group encounters a fault, re-solve the extensive domain name of the corresponding server group to another network protocol address.

When the server group used by the portal domain names www.163.com.bbb.aaa.com, news.163.com.bbb.aaa.com, and music.163.com.bbb.aaa.com encounters a fault, the content delivery network generates a domain name system configuration to re-configure the extensive domain name *.bbb.aaa.com of the three portal domain names in the content delivery network from the network protocol address 1.1.1.1 of the original server group to the network protocol address (e.g., 1.1.1.2) of a new server group. That is, the extensive domain name *.bbb.aaa.com may be re-solved to 1.1.1.2. The scheduling module 404 may, via only one domain name system configuration, transfer the three user domain names to the new server group all at once in the content delivery network, thereby shortening the server scheduling time and reducing the configuration amount.

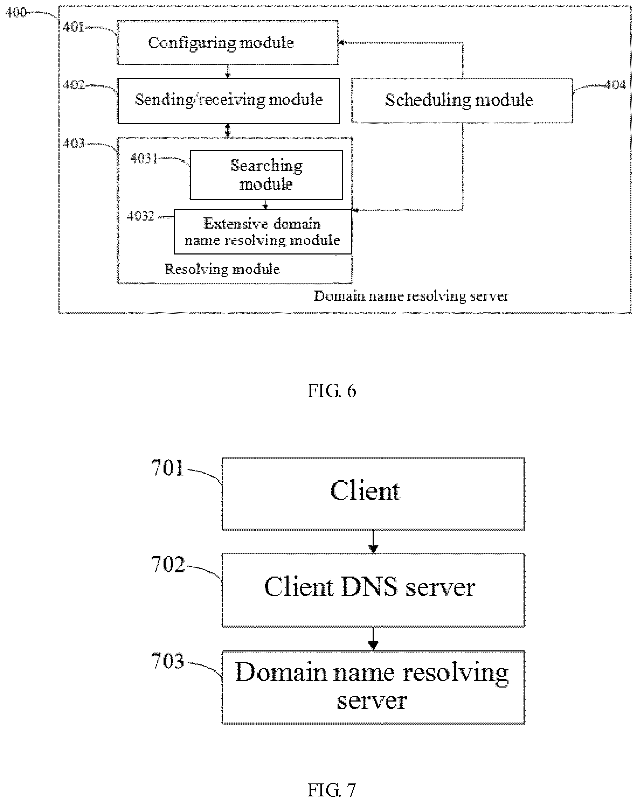

In an implementation method of another domain name resolution server 400 according to the present disclosure, as shown in FIG. 6, the resolving module 403 comprises: a searching module 4031 and an extensive domain name resolving module 4032.

The searching module 4031 is configured to search whether the portal domain name has a precisely matched A record, if the portal domain name has the precisely matched A record, the precisely matched A record may be used as the resolution result to be sent back to the client, and if not, the extensive domain name resolving module 4032 may be configured to perform resolving.

The precisely matched A record of the portal domain name comprises a network protocol address of a source station server corresponding to the domain name requested by the client, and a network protocol address of a custom server corresponding to the domain name requested by the client. Such configuration may be realized by the configuring module 401. When the domain name requested by the client needs to be back to the source station, the searching module 4031 may, after search, use the network protocol address of the source station as the resolution result to be sent back to the client. For example, if the domain name www.163.com requested by the client needs to be back to the source station at the Beijing telecom area, only the A record of www.163.com.bbb.aaa.com needs to be configured at the Beijing telecom area. If the content delivery network receives the resolution request of www.163.com from the Beijing telecom, the searching module 4031 may use the network protocol address of the source station as the resolution result to be sent back to the client via the sending/receiving module 402.

When the domain name requested by the client needs to use a custom server, the searching module 4031 may, after search, use the network protocol address of the custom server as the resolution result to be sent back to the client. For example, if the domain name www.163.com requested by the client needs to use a special server at the Xinjiang telecom, then only the special server needs to be individually configured for www.163.com at the Xinjiang telecom area. If the content delivery network receives the resolution request of www.163.com at the Xinjiang telecom sent from the client, the searching module 4031 may use the network protocol address of the custom server as the resolution result to be sent back to the client via the sending/receiving module 402.

The extensive domain name resolving module 4032 is configured to, when the searching module 4031 finds no precisely matched A record corresponding to the portal domain name, use the A record of the extensive domain name corresponding to the portal domain name as the resolution result after performing resolving on the portal domain name to be sent back to the client. For example, the domain name www.163.com requested by the client needs no special configuration at the Hunan telecom, and when the content delivery network receives the resolution request of www.163.com at the Hunan telecom sent from the client and the searching module 4031 finds no precisely matched A record of www.163.com.bbb.aaa.com, the extensive domain name resolving module 4032 uses the A record corresponding to the extensive domain name *.bbb.aaa.com as the resolution result after performing resolving on the portal domain name www.163.com.bbb.aaa.com. The resolution result is sent back to the client via the sending/receiving module 402.

The present disclosure does not need to modify the extensive domain name or the second-level domain name, and only the minimum amount of configuration needs to be added to support the special back-to-source configuration or other special configurations.

The present disclosure provides a domain name resolution system, thereby implementing the domain name resolution method in embodiments illustrated in FIG. 1. As shown in FIG. 7, the domain name resolution system provided by embodiments of the present disclosure comprises: a client DNS server 702, and a domain name resolution system 703 corresponding to any embodiment illustrated from FIG. 4 to FIG. 6.

The domain name requested by the client 701 is aliased to the portal domain name in the client DNS server 702 via a CNAME, where the portal domain name comprises the domain name requested by the client 701 as a prefix and a suffix of the extensive domain name as the suffix. The client DNS server 702 receives the domain name resolution request sent from the client 701, and resolves the domain name requested by the client 701 to a portal domain name of the content delivery network via a CNAME.

The domain name resolution server 703 is a domain name resolution sever corresponding to any embodiment illustrated in FIG. 4-FIG. 6. After the client DNS server 702 resolves the domain name requested by the client 701 to the portal domain name of the content delivery network via a CNAME, the client 701 may request the domain name resolution server 703 to perform resolving on the portal domain name. The domain name resolution server 703 configures the same extensive domain name for portal domain names using the same server group. The domain name resolution server 703 receives the portal domain name resolution request, performs resolving on the portal domain name, and uses a resolution result as the resolution result of the domain name requested by the client to be sent back to the client 701.

For example, the client 701 sends a domain name resolution request of www.163.com to the client DNS server 702. The domain name www.163.com requested by the client 701 is aliased to the portal domain name www.163.com.bbb.aaa.com via a CNAME at the client DNS server 702. The client DNS server 702 resolves the domain name www.163.com requested by the client to the portal domain name www.163.com.bbb.aaa.com of the content delivery network via a CNAME. The domain name resolution server 703 receives the resolution request of the portal domain name www.163.com.bbb.aaa.com, and performs resolving on the portal domain name www.163.com.bbb.aaa.com. After resolution is fulfilled, the domain name resolution server 703 uses the resolution result as the resolution result of the domain name www.163.com sent from the client 701 to be sent back to the client 701.

In particular, the extensive domain name *.bbb.aaa.com of the portal domain name www.163.com.bbb.aaa.com is configured in advance by the domain name resolution server 703 based on the server group used when resolving the portal domain name www.163.com.bbb.aaa.com. All portal domain names using the server group are configured with the same extensive domain name *.bbb.aaa.com.

Performing, by the domain name resolution server 703, resolving on the portal domain name, and using the resolution result as the resolution result of the domain name requested by the client to be sent back to the client 701 may specifically comprise: searching whether the portal domain name has a precisely matched A record, if yes, the precisely matched A record is used as the resolution result to be sent back to the client 701; otherwise the A record of the extensive domain name corresponding to the portal domain name is used as the resolution result after performing resolving on the portal domain name to be sent back to the client 701.

The serial number of embodiments of the present disclosure is for descriptive purposes only, and does not represent the preference of the embodiments.

The device embodiments described above are for illustrative purposes only, and the units illustrated as separate parts may be or may not be physically separated. The parts illustrated as units may be or may not be physical units. That is, the parts may be located in a same place, or distributed to a plurality of network units. A part of or all modules thereof may be selected to realize the object of solutions of the present disclosure based on the actual demand. Those ordinarily skilled in the relevant art may understand and implement the present disclosure without contributing creative labor.

Via the descriptions of the aforementioned embodiments, those skilled in the relevant art may clearly understand that each embodiment may be implemented using software and an essential universal hardware platform, or via the hardware. Based on such understanding, the nature of the aforementioned technical solutions or the part of the aforementioned technical solutions that contributes to the existing technique may be embodied in a form of software products. Such computer software product may be stored in a computer readable storage medium, such as ROM/RAM, magnetic disc, and optical disc, etc., that comprises a plurality of commands configured to allow a computing device (e.g., a personal computer, a server, or a network device, etc.) to execute each embodiment or methods described in some parts of the embodiments.

The aforementioned is only preferred embodiments of the present disclosure and is not configured to limit the present disclosure. The invention is defined by the appended independent claims. Preferred embodiments are defined by the dependent claims.

## Claims

1. A domain name resolution method, comprising following steps:
configuring (S101; S301) a same extensive domain name for a plurality of portal domain names using a same server group;
resolving (S102; S302) a domain name requested by a client to a portal domain name of the plurality of portal domain names configured with the same extensive domain name via a CNAME; and
performing resolving (S103; S303) on the portal domain name, and using a resolution result of the portal domain name as the resolution result of the domain name requested by the client to be sent back to the client,
wherein the portal domain name comprises the domain name requested by the client as a prefix and a suffix of the extensive domain name as the suffix.

2. The domain name resolution method according to claim 1, wherein steps of performing resolving on the portal domain name, and using the resolution result as the resolution result of the domain name requested by the client to be sent back to the client comprises:
searching (S1031) whether the portal domain name has a precisely matched A record, when the portal domain name has the precisely matched A record, using (S1032) the precisely matched A record as the resolution result to be sent back to the client, otherwise using (S1033) an A record of an extensive domain name corresponding to the portal domain name as the resolution result to be sent back to the client.

3. The domain name resolution method according to claim 2, wherein the precisely matched A record of the portal domain name comprises a network protocol address of a source station server corresponding to the domain name requested by the client, and when the domain name requested by the client needs to be back to a source station, the network protocol address of the source station server is used as the resolution result to be sent back to the client.

4. The domain name resolution method according to claim 2, wherein the precisely matched A record of the portal domain name comprises a network protocol address of a custom server corresponding to the domain name requested by the client, and when the domain name requested by the client needs to use the custom server, the network protocol address of the custom server is used as the resolution result to be sent back to the client.

5. The domain name resolution method according to claim 1, wherein the same server group comprises a plurality of server clusters, each server cluster has a unique network protocol address, and the plurality of portal domain names using the same extensive domain name is resolved to have a network protocol address corresponding to the same server group.

6. The domain name resolution method according to claim 5, wherein the domain name resolution method further comprises:
when a server cluster in the server group encounters a fault (S304), re-resolving the extensive domain name of the server group to another network protocol address.

7. A domain name resolution server (400; 703), comprising:
a configuring module (401), configured to configure a same extensive domain name for a plurality of portal domain names using a same server group; a sending/receiving module (402) connected to the configuring module, configured to receive a resolution request of a portal domain name, wherein a domain name requested by a client (701) is resolved to the portal domain name of the plurality of portal domain names configured with the same extensive domain name via a CNAME; and a resolving module (403) connected to the sending/receiving module, configured to perform resolving on the portal domain name and use a resolution result of the portal domain name as the resolution result of the domain name requested by the client to be sent back to the client, wherein the portal domain name comprises the domain name requested by the client as a prefix and a suffix of the extensive domain name as the suffix.

8. The domain name resolution server according to claim 7, wherein the resolving module comprises:
a searching module (4031), configured to search whether the portal domain name has a precisely matched A record, and when the portal domain name has the precisely matched A record, use the precisely matched A record as the resolution result to be sent back to the client; and an extensive domain name resolving module (4032) connected to the searching module, configured to, when the searching module finds no precisely matched A record corresponding to the portal domain name, use the A record of the extensive domain name corresponding to the portal domain name as the resolution result to be sent back to the client.

9. The domain name resolution server according to claim 7, wherein the domain name server further comprises:
a scheduling module (404) respectively connected to the configuring module (401) and the resolving module (403) and configured to, when a certain server cluster in the server group encounters a fault, re-resolve the extensive domain name corresponding to the server group to another network protocol address.

10. The domain name resolution server according to claim 8, wherein the configuring module is further configured to configure the precisely matched A record of the portal domain name, the precisely matched A record of the portal domain name comprises a network protocol address of a source station server corresponding to the domain name requested by the client, and when the domain name requested by the client needs to be back to a source station, the searching module uses the network protocol address of the source station as the resolution result to be sent back to the client.

11. The domain name resolution server according to claim 8, wherein the configuring module is further configured to configure the precisely matched A record of the portal domain name, the precisely matched A record of the portal domain name comprises a network protocol address of a custom server corresponding to the domain name requested by the client, and when the domain name requested by the client needs to use the custom server, the searching module uses the network protocol address of the custom server as the resolution result to be sent back to the client.

12. A domain name resolution system, comprising:
a client DNS server (702), configured to resolve a domain name requested by a client (701) to a portal domain name of a content delivery network via a CNAME; and
the domain name resolution server (703) according to any one of claims 7-11 for configuring the same extensive domain name for the plurality of portal domain names using the same server group; receiving the resolution request of the portal domain name of the plurality of portal domain names configured with the same extensive domain name, performing resolving on the portal domain name, and using the resolution result of the portal domain name as the resolution result of the domain name requested by the client to be sent back to the client.

13. The domain name resolution system according to claim 12, wherein performing, by the domain name resolution server, resolving on the portal domain name, and using the resolution result as the resolution result of the domain name requested by the client to be sent back to the client specifically comprises:
searching whether the portal domain name has the precisely matched A record, and when the portal domain name has the precisely matched A record, using the precisely matched A record as the resolution result to be sent back to the common network DNS server; otherwise using the A record of the extensive domain name corresponding to the portal domain name as the resolution result to be sent back to the client.

14. The domain name resolution system according to claim 12, wherein the domain name requested by the client is aliased to the portal domain name via a CNAME at the client DNS server, and the portal domain name comprises the domain name requested by the client as a prefix and a suffix of the extensive domain name as the suffix.

## Patentansprüche

1. Domänennamensauflösungsverfahren, umfassend die folgenden Schritte:
Konfigurieren (S101; S301) desselben umfassenden Domänennamen für mehrere Portal-Domänennamen unter Verwendung derselben Servergruppe;
Auflösen (S102; S302) eines Domänennamen, der von einem Clienten angefordert wird, zu einem Portal-Domänennamen von den mehreren Portal-Domänennamen, die mit demselben umfassenden Domänennamen konfiguriert sind, mittels einem CNAME; und
Durchführen eines Auflösens (S103; S303) an dem Portal-Domänennamen und Verwenden eines Auflösungsergebnisses des Portal-Domänennamen als das Auflösungsergebnis des Domänennamen, der von dem Clienten angefordert wurde, das an den Clienten zurückgesendet werden soll,
wobei der Portal-Domänenname den Domänennamen, der von dem Clienten angefordert wurde, als ein Präfix und ein Suffix des umfassenden Domänennamen als das Suffix umfasst.

2. Domänennamensauflösungsverfahren nach Anspruch 1, wobei die Schritte des Durchführens eines Auflösens an dem Portal-Domänennamen und des Verwendens des Auflösungsergebnisses als das Auflösungsergebnis des Domänennamen, der von dem Clienten angefordert wurde, das an den Clienten zurückgesendet werden soll, umfassen:
Suchen (S1031), ob der Portal-Domänenname einen präzise abgestimmten A-Datensatz aufweist; wenn der Portal-Domänenname einen präzise abgestimmten A-Datensatz aufweist, Verwenden (S1032) des präzise abgestimmten A-Datensatzes als das Auflösungsergebnis, das an den Clienten zurückgesendet werden soll, andernfalls Verwenden (S1033) eines A-Datensatzes eines umfassenden Domänennamen, der dem Portal-Domänennamen entspricht, als das Auflösungsergebnis, das an den Clienten zurückgesendet werden soll.

3. Domänennamensauflösungsverfahren nach Anspruch 2, wobei der präzise abgestimmte A-Datensatz des Portal-Domänennamen eine Netzwerkprotokoll-Adresse eines Quellstationsservers, die dem Domänennamen entspricht, der von dem Clienten angefordert wurde, umfasst, und wenn der Domänenname, der von dem Clienten angefordert wurde, zurück bei einer Quellstation sein muss, die Netzwerkprotokoll-Adresse des Quellstationsservers als das Auflösungsergebnis, das an den Clienten zurückgesendet werden soll, verwendet wird.

4. Domänennamensauflösungsverfahren nach Anspruch 2, wobei der präzise abgestimmte A-Datensatz des Portal-Domänennamen eine Netzwerkprotokoll-Adresse eines benutzerdefinierten Servers, die dem Domänennamen entspricht, der von dem Clienten angefordert wurde, umfasst, und wenn der Domänenname, der von dem Clienten angefordert wurde, den benutzerdefinierten Server verwenden muss, die Netzwerkprotokoll-Adresse des benutzerdefinierten Servers als das Auflösungsergebnis, das an den Clienten zurückgesendet werden soll, verwendet wird.

5. Domänennamensauflösungsverfahren nach Anspruch 1, wobei dieselbe Servergruppe mehrere Server-Cluster umfasst, wobei jeder Server-Cluster eine einzigartige Netzwerkprotokoll-Adresse aufweist, und die mehreren Portal-Domänennamen, die denselben umfassenden Domänennamen verwenden, aufgelöst werden, um eine Netzwerkprotokoll-Adresse aufzuweisen, die derselben Servergruppe entspricht.

6. Domänennamensauflösungsverfahren nach Anspruch 5, wobei das Domänennamensauflösungsverfahren weiterhin umfasst:
wenn ein Server-Cluster in der Servergruppe auf einen Fehler stößt (S304), erneutes Auflösen des umfassenden Domänennamen der Servergruppe zu einer anderen Netzwerkprotokoll-Adresse.

7. Domänennamensauflösungsserver (400; 703), umfassend:
ein Konfigurierungsmodul (401), das dazu konfiguriert ist, denselben umfassenden Domänennamen für mehrere Portal-Domänennamen unter Verwendung derselben Servergruppe zu konfigurieren; ein Sende-/Empfangsmodul (402), das mit dem Konfigurierungsmodul verbunden ist und das dazu konfiguriert ist, eine Auflösungsanforderung für einen Portal-Domänennamen zu empfangen, wobei ein Domänenname, der von einem Clienten (701) angefordert wird, zu dem Portal-Domänennamen von den mehreren Portal-Domänennamen, die mit demselben umfassenden Domänennamen konfiguriert sind, mittels einem CNAME aufgelöst wird; und ein Auflösungsmodul (403), das mit dem Sende-/Empfangsmodul verbunden ist und das dazu konfiguriert ist, ein Auflösen an dem Portal-Domänennamen durchzuführen und ein Auflösungsergebnis des Portal-Domänennamen als das Auflösungsergebnis des Domänennamen, der von dem Clienten angefordert wurde, das an den Clienten zurückgesendet werden soll, zu verwenden, wobei der Portal-Domänenname den Domänennamen, der von dem Clienten angefordert wurde, als ein Präfix und ein Suffix des umfassenden Domänennamen als das Suffix umfasst.

8. Domänennamensauflösungsserver nach Anspruch 7, wobei das Auflösungsmodul umfasst:
ein Suchmodul (4031), das dazu konfiguriert ist zu suchen, ob der Portal-Domänenname einen präzise abgestimmten A-Datensatz aufweist; wenn der Portal-Domänenname einen präzise abgestimmten A-Datensatz aufweist, den präzise abgestimmten A-Datensatz als das Auflösungsergebnis, das an den Clienten zurückgesendet werden soll zu verwenden; und ein Modul (4032) zum Auflösen eines umfassenden Domänennamen, das dazu konfiguriert ist, wenn das Suchmodul keinen präzise abgestimmten A-Datensatz, der dem Portal-Domänennamen entspricht, findet, den A-Datensatz des umfassenden Domänennamen, der dem Portal-Domänennamen entspricht, als das Auflösungsergebnis, das an den Clienten zurückgesendet werden soll, zu verwenden.

9. Domänennamensauflösungsserver nach Anspruch 7, wobei der Domänennamensserver weiterhin umfasst:
ein Planungsmodul (404), das jeweils mit dem Konfigurierungsmodul (401) und dem Auflösungsmodul (403) verbunden ist und dazu konfiguriert ist, wenn ein bestimmter Server-Cluster in der Servergruppe auf einen Fehler stößt, den umfassenden Domänennamen, der der Servergruppe entspricht, erneut zu einer anderen Netzwerkprotokoll-Adresse aufzulösen.

10. Domänennamensauflösungsserver nach Anspruch 8, wobei das Konfigurierungsmodul weiterhin dazu konfiguriert ist, den präzise abgestimmten A-Datensatz des Portal-Domänennamen zu konfigurieren, wobei der präzise abgestimmte A-Datensatz des Portal-Domänennamen eine Netzwerkprotokoll-Adresse eines Quellstationsservers, die dem Domänennamen entspricht, der von dem Clienten angefordert wurde, umfasst, und wenn der Domänenname, der von dem Clienten angefordert wurde, zurück bei einer Quellstation sein muss, das Suchmodul die Netzwerkprotokoll-Adresse der Quellstation als das Auflösungsergebnis, das an den Clienten zurückgesendet werden soll, verwendet.

11. Domänennamensauflösungsserver nach Anspruch 8, wobei das Konfigurierungsmodul weiterhin dazu konfiguriert ist, den präzise abgestimmten A-Datensatz des Portal-Domänennamen zu konfigurieren, wobei der präzise abgestimmte A-Datensatz des Portal-Domänennamen eine Netzwerkprotokoll-Adresse eines benutzerdefinierten Servers, die dem Domänennamen entspricht, der von dem Clienten angefordert wurde, umfasst, und wenn der Domänenname, der von dem Clienten angefordert wurde, den benutzerdefinierten Server verwenden muss, das Suchmodul die Netzwerkprotokoll-Adresse des benutzerdefinierten Servers als das Auflösungsergebnis, das an den Clienten zurückgesendet werden soll, verwendet.

12. Domänennamensauflösungssystem, umfassend:
einen Client-DNS-Server (702), der dazu konfiguriert ist, einen Domänennamen, der von einem Clienten (701) angefordert wird, zu einem Portal-Domänennamen eines Content-Delivery-Netzwerks mittels einem CNAME aufzulösen; und
den Domänennamensauflösungsserver (703) nach einem der Ansprüche 7-11 zum Konfigurieren desselben umfassenden Domänennamen für die mehreren Portal-Domänennamen unter Verwendung derselben Servergruppe; Empfangen der Auflösungsanforderung für den Portal-Domänennamen von den mehreren Portal-Domänennamen, die mit demselben umfassenden Domänennamen konfiguriert sind, Durchführen eines Auflösens an dem Portal-Domänennamen und Verwenden des Auflösungsergebnisses des Portal-Domänennamen als das Auflösungsergebnis des Domänennamen, der von dem Clienten angefordert wurde, das an den Clienten zurückgesendet werden soll.

13. Domänennamensauflösungssystem nach Anspruch 12, wobei das Durchführen eines Auflösens an dem Portal-Domänennamen durch den Domänennamensauflösungsserver und das Verwenden des Auflösungsergebnisses als das Auflösungsergebnis des Domänennamen, der von dem Clienten angefordert wurde, das an den Clienten zurückgesendet werden soll, spezifisch umfassen:
Suchen, ob der Portal-Domänenname den präzise abgestimmten A-Datensatz aufweist, und wenn der Portal-Domänenname den präzise abgestimmten A-Datensatz aufweist, Verwenden des präzise abgestimmten A-Datensatzes als das Auflösungsergebnis, das an den gemeinsamen Netzwerk-DNS-Server zurückgesendet werden soll; andernfalls Verwenden des A-Datensatzes des umfassenden Domänennamen, der dem Portal-Domänennamen entspricht, als das Auflösungsergebnis, das an den Clienten zurückgesendet werden soll.

14. Domänennamensauflösungssystem nach Anspruch 12, wobei der Domänenname, der von dem Clienten angefordert wird, zu dem Portal-Domänennamen mittels einem CNAME an dem Client-DNS-Server aliasiert wird und der Portal-Domänenname den Domänennamen, der von dem Clienten angefordert wurde, als ein Präfix und ein Suffix des umfassenden Domänennamen als das Suffix umfasst.

## Revendications

1. Procédé de résolution de nom de domaine, comprenant les étapes suivantes :
la configuration (S101 ; S301) d'un même nom de domaine étendu pour une pluralité de noms de domaine de portail en utilisant un même groupe de serveurs ;
la résolution (S102 ; S302) d'un nom de domaine demandé par un client en un nom de domaine de portail de la pluralité de noms de domaine de portail configurés avec le même nom de domaine étendu via un CNAME ; et
la mise en œuvre d'une résolution (S103 ; S303) sur le nom de domaine de portail, et l'utilisation d'un résultat de résolution du nom de domaine de portail comme résultat de résolution du nom de domaine demandé par le client à renvoyer au client,
dans lequel le nom de domaine de portail comprend le nom de domaine demandé par le client comme préfixe et un suffixe du nom de domaine étendu comme suffixe.

2. Procédé de résolution de nom de domaine selon la revendication 1, dans lequel les étapes de mise en œuvre d'une résolution sur le nom de domaine de portail, et d'utilisation du résultat de résolution comme résultat de résolution du nom de domaine demandé par le client à renvoyer au client comprennent :
le fait de rechercher (S1031) si le nom de domaine de portail a un enregistrement A correspondant précisément, lorsque le nom de domaine de portail a l'enregistrement A correspondant précisément, l'utilisation (S1032) de l'enregistrement A correspondant précisément comme résultat de résolution à renvoyer au client, ou l'utilisation (S1033) d'un enregistrement A d'un nom de domaine étendu correspondant au nom de domaine de portail comme résultat de résolution à renvoyer au client.

3. Procédé de résolution de nom de domaine selon la revendication 2, dans lequel l'enregistrement A correspondant précisément du nom de domaine de portail comprend une adresse de protocole réseau d'un serveur de station source correspondant au nom de domaine demandé par le client, et lorsque le nom de domaine demandé par le client doit être renvoyé à une station source, l'adresse de protocole réseau du serveur de station source est utilisée comme résultat de résolution à renvoyer au client.

4. Procédé de résolution de nom de domaine selon la revendication 2, dans lequel l'enregistrement A correspondant précisément du nom de domaine de portail comprend une adresse de protocole réseau d'un serveur personnalisé correspondant au nom de domaine demandé par le client, et lorsque le nom de domaine demandé par le client a besoin d'utiliser le serveur personnalisé, l'adresse de protocole réseau du serveur personnalisé est utilisée comme résultat de résolution à renvoyer au client.

5. Procédé de résolution de nom de domaine selon la revendication 1, dans lequel le même groupe de serveurs comprend une pluralité de grappes de serveurs, chaque grappe de serveurs a une adresse de protocole réseau unique, et la pluralité de noms de domaine de portail utilisant le même nom de domaine étendu est résolue pour avoir un adresse de protocole réseau correspondant au même groupe de serveurs.

6. Procédé de résolution de nom de domaine selon la revendication 5, dans lequel le procédé de résolution de nom de domaine comprend en outre :
lorsqu'une grappe de serveurs du groupe de serveurs rencontre un défaut (S304), la résolution à nouveau du nom de domaine étendu du groupe de serveurs en une autre adresse de protocole réseau.

7. Serveur de résolution de nom de domaine (400 ; 703), comprenant :
un module de configuration (401), configuré pour configurer un même nom de domaine étendu pour une pluralité de noms de domaine de portail en utilisant un même groupe de serveurs ; un module d'envoi/de réception (402) connecté au module de configuration, configuré pour recevoir une demande de résolution d'un nom de domaine de portail, dans lequel un nom de domaine demandé par un client (701) est résolu en nom de domaine de portail de la pluralité de noms de domaine de portail configurés avec le même nom de domaine étendu via un CNAME ; et un module de résolution (403) connecté au module d'envoi/de réception, configuré pour mettre en œuvre une résolution sur le nom de domaine de portail et utiliser un résultat de résolution du nom de domaine de portail comme résultat de résolution du nom de domaine demandé par le client à renvoyer au client, dans lequel le nom de domaine de portail comprend le nom de domaine demandé par le client comme préfixe et un suffixe du nom de domaine étendu comme suffixe.

8. Serveur de résolution de nom de domaine selon la revendication 7, dans lequel le module de résolution comprend :
un module de recherche (4031), configuré pour rechercher si le nom de domaine de portail a un enregistrement A correspondant précisément, et lorsque le nom de domaine de portail a l'enregistrement A correspondant précisément, utiliser l'enregistrement A correspondant précisément comme résultat de résolution à renvoyer au client ; et un module de résolution de nom de domaine étendu (4032) connecté au module de recherche, configuré pour, lorsque le module de recherche ne trouve aucun enregistrement A correspondant précisément au nom de domaine de portail, utiliser l'enregistrement A du nom de domaine étendu correspondant au nom de domaine de portail comme résultat de résolution à renvoyer au client.

9. Serveur de résolution de nom de domaine selon la revendication 7, dans lequel le serveur de nom de domaine comprend en outre :
un module de planification (404) respectivement connecté au module de configuration (401) et au module de résolution (403) et configuré pour, lorsqu'une certaine grappe de serveurs du groupe de serveurs rencontre un défaut, résoudre à nouveau le nom de domaine étendu correspondant au groupe de serveurs en une autre adresse de protocole réseau.

10. Serveur de résolution de nom de domaine selon la revendication 8, dans lequel le module de configuration est en outre configuré pour configurer l'enregistrement A correspondant précisément du nom de domaine de portail, l'enregistrement A correspondant précisément du nom de domaine de portail comprend une adresse de protocole réseau d'un serveur de station source correspondant au nom de domaine demandé par le client, et lorsque le nom de domaine demandé par le client doit être renvoyé à une station source, le module de recherche utilise l'adresse de protocole réseau de la station source comme résultat de résolution à renvoyer au client.

11. Serveur de résolution de nom de domaine selon la revendication 8, dans lequel le module de configuration est en outre configuré pour configurer l'enregistrement A correspondant précisément du nom de domaine de portail, l'enregistrement A correspondant précisément du nom de domaine de portail comprend une adresse de protocole réseau d'un serveur personnalisé correspondant au nom de domaine demandé par le client, et lorsque le nom de domaine demandé par le client doit utiliser le serveur personnalisé, le module de recherche utilise l'adresse de protocole réseau du serveur personnalisé comme résultat de résolution à renvoyer au client.

12. Système de résolution de nom de domaine, comprenant :
un serveur DNS client (702), configuré pour résoudre un nom de domaine demandé par un client (701) en un nom de domaine de portail d'un réseau de distribution de contenu via un CNAME ; et
le serveur de résolution de nom de domaine (703) selon l'une quelconque des revendications 7 à 11 pour configurer le même nom de domaine étendu pour la pluralité de noms de domaine de portail en utilisant le même groupe de serveurs ; recevoir la demande de résolution du nom de domaine de portail de la pluralité de noms de domaine de portail configurés avec le même nom de domaine étendu, mettre en œuvre une résolution sur le nom de domaine de portail et utiliser le résultat de résolution du nom de domaine de portail comme résultat de résolution du nom de domaine demandé par le client à renvoyer au client.

13. Système de résolution de nom de domaine selon la revendication 12, dans lequel la mise en œuvre, par le serveur de résolution de nom de domaine, d'une résolution sur le nom de domaine de portail, et l'utilisation du résultat de résolution comme résultat de résolution du nom de domaine demandé par le client à renvoyer au client comprennent :
le fait de rechercher si le nom de domaine de portail a l'enregistrement A correspondant précisément, et lorsque le nom de domaine de portail a l'enregistrement A correspondant précisément, l'utilisation de l'enregistrement A correspondant précisément comme résultat de résolution à renvoyer au serveur DNS réseau commun ; ou l'utilisation de l'enregistrement A d'un nom de domaine étendu correspondant au nom de domaine de portail comme résultat de résolution à renvoyer au client.

14. Système de résolution de nom de domaine selon la revendication 12, dans lequel le nom de domaine demandé par le client est aliasé au nom de domaine de portail via un CNAME sur le serveur DNS client, et le nom de domaine de portail comprend le nom de domaine demandé par le client comme préfixe et un suffixe du nom de domaine étendu comme suffixe.
